# EUROPEAN PATENT SPECIFICATION

(11) **EP 3 512 283 B1**
(45) Date of publication and mention of the grant of the patent: **06.01.2021**
(21) Application number: 17867181.4
(22) Date of filing: 23.10.2017
(51) Int. Cl.: H04W 72/04

(54) **SCHEDULING METHOD AND USER EQUIPMENT**
PLANUNGSVERFAHREN UND BENUTZERGERÄT
PROCÉDÉ DE PLANIFICATION ET EQUIPEMENT D'UTILISATEUR

(30) Priority: 04.11.2016 CN 201610962288
(43) Date of publication of application: 17.07.2019
(73) Proprietor: China Academy of Telecommunications Technology, Hai Dian District Beijing 100191 (CN)
(72) Inventor: ZHAO, Yali, Beijing 100191 (CN); PAN, Xueming, Beijing 100191 (CN); XU, Fangli, Beijing 100191 (CN)
(74) Representative: dompatent von Kreisler Selting Werner - Partnerschaft von Patent- und Rechtsanwälten mbB
(86) International application number: PCT/CN2017/107342
(87) International publication number: WO 2018/082467

(56) References cited:
- WO-A1-2016/045011
- CN-A- 103 327 613
- CN-A- 104 661 316

## Description

### TECHNICAL FIELD

The present disclosure relates to the field of communication technology, in particular to a scheduling method and a User Equipment (UE).

### BACKGROUND

Long Term Evolution (LTE)/LTE-Advanced (LTE-A) system is a scheduling-based communication system. When data in a transmission buffer of a UE needs to be transmitted, the UE needs to transmit a Buffer Status Report (BSR) to a base station, so as to notify the base station of data information to be currently transmitted in the transmission buffer of the UE. Upon the receipt of the BSR from the UE, the base station allocates a corresponding Uplink-Shared Channel (UL-SCH) resource for the UE in accordance with a data volume to be transmitted by the UE and a service type, and notifies the UE to transmit the data on the allocated UL-SCH resource.

The BSR is also transmitted by the UE to the base station through the UL-SCH resource. When the UE needs to report the BSR but there is currently not UL-SCH resource, it may trigger a Scheduling Request (SR), so as to request the base station to allocate the UL-SCH resource for the BSR to be transmitted.

After the triggering of the SR, the SR may be transmitted in two ways, i.e., the SR may be transmitted through a dedicated scheduling request resource (Dedicated-SR (D-SR)) or through a random access process (Random Access-SR (RA-SR)). A basic principle for the transmission of the SR lies in that an RA-SR resource shall not be adopted when there is the D-SR resource.

For a conventional LTE system, a Transmission Time Interval (TTI) has a length of 1ms, and an uplink dedicated SR is transmitted on a Physical Uplink Control Channel (PUCCH) in a PUCCH format 1/1a/1b.

In LTE Release 14 (R14), apart from the TTI of 1ms, a short TTI mechanism is also introduced so as to further reduce a service transmission delay. In order to support the short TTI, a series of physical layer channels have been defined, and the PUCCH corresponding to the short TTI is re-named as PUCCH for short TTI (sPUCCH).

Currently, in the case that the PUCCH and the sPUCCH coexist, there is no appropriate scheme for the transmission of the SR, so the scheduling performance of the entire system may be adversely affected.

CN103327613A discloses a method for transmitting the scheduling request in the wireless communication network, which combines two transmission modes including the dedicated scheduling request of the uplink control channel and the random access channel.

### SUMMARY

An object of the present disclosure is to provide a scheduling method and a UE, so as to provide an appropriate scheme for the transmission of the SR in the case that the PUCCH and the sPUCCH coexist in related art.

In one aspect, the present disclosure provides a scheduling method for use in a UE, including: determining a correspondence between predetermined service characteristics and SR resources configured on different channels; determining a first service characteristic of a first service for triggering a SR when it is detected that the SR has been triggered; and selecting a SR resource corresponding to the first service characteristic in accordance with the first service characteristic and the correspondence, and transmitting the SR through the selected SR resource. The SR resources configured on different channels include a SR resource configured on a PUCCH and a SR resource configured on a sPUCCH.

In a possible embodiment of the present disclosure, the determining the correspondence between the predetermined service characteristics and the SR resources configured on different channels includes: determining the correspondence between the predetermined service characteristics and the SR resources configured on different channels in accordance with a pre-configured default rule or a rule pre-agreed with a base station through a protocol.

In a possible embodiment of the present disclosure, the determining the correspondence between the predetermined service characteristics and the SR resources configured on different channels includes: determining the correspondence between the predetermined service characteristics and the SR resources configured on different channels in accordance with a configuration instruction about the correspondence between the predetermined service characteristics and the SR resources configured on different channels transmitted from the base station.

In a possible embodiment of the present disclosure, prior to selecting the SR resource corresponding to the first service characteristic in accordance with the first service characteristic and the correspondence and transmitting the SR through the selected SR resource, the scheduling method further includes: receiving a Radio Resource Control (RRC) message transmitted from the base station; and determining the SR resources configured by the base station for the UE on the PUCCH and the sPUCCH respectively in accordance with the RRC message.

In a possible embodiment of the present disclosure, the selecting the SR resource corresponding to the first service characteristic in accordance with the first service characteristic and the correspondence and transmitting the SR through the selected SR resource includes: selecting the SR resource corresponding to the first service characteristic from the SR resources configured by the base station for the UE on the PUCCH and the sPUCCH respectively in accordance with the first service characteristic and the correspondence, and transmitting the SR through the selected SR resource.

In a possible embodiment of the present disclosure, the predetermined service characteristics include one or more of a Quality of Service (QoS), a priority level and a delay requirement.

In another aspect, the present disclosure provides in some embodiments a UE, including: a first determination module configured to determine a correspondence between predetermined service characteristics and SR resources configured on different channels; a second determination module configured to determine a first service characteristic of a first service for triggering a SR when it is detected that the SR has been triggered; and a transmission module configured to select a SR resource corresponding to the first service characteristic in accordance with the first service characteristic and the correspondence, and transmit the SR through the selected SR resource. The SR resources configured on the different channels include a SR resource configured on a PUCCH and a SR resource configured on a sPUCCH.

In a possible embodiment of the present disclosure, the first determination module includes: a first determination unit configured to determine the correspondence between the predetermined service characteristics and the SR resources configured on different channels in accordance with a pre-configured default rule or a rule pre-agreed with a base station through a protocol.

In a possible embodiment of the present disclosure, the first determination module includes: a second determination unit configured to determine the correspondence between the predetermined service characteristics and the SR resources configured on different channels in accordance with a configuration instruction about the correspondence between the predetermined service characteristics and the SR resources configured on different channels transmitted from the base station.

In a possible embodiment of the present disclosure, the UE further includes: a first reception module configured to receive a RRC message transmitted from the base station; and a third determination module configured to determine the SR resources configured by the base station for the UE on the PUCCH and the sPUCCH respectively in accordance with the RRC message.

In a possible embodiment of the present disclosure, the transmission module includes: a transmission unit configured to select the SR resource corresponding to the first service characteristic from the SR resources configured by the base station for the UE on the PUCCH and the sPUCCH respectively in accordance with the first service characteristic and the correspondence, and transmit the SR through the selected SR resource.

In a possible embodiment of the present disclosure, the predetermined service characteristics include one or more of a QoS, a priority level and a delay requirement.

In yet another aspect, a scheduling method for use in a base station includes receiving a SR transmitted from a UE. After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels include a SR resource configured on a PUCCH and a SR resource configured on a sPUCCH.

Subsequent to receiving the SR transmitted from the UE, the scheduling method further includes: determining the correspondence between the predetermined service characteristics and the SR resources configured on different channels; determining the first service characteristic of the first service for triggering the SR in accordance with the correspondence and the SR resource through which the UE transmits the SR; and determining a scheduling policy for the UE in accordance with the first service characteristic.

The determining the correspondence between the predetermined service characteristics and the SR resources configured on different channels includes: determining the correspondence between the predetermined service characteristics and the SR resources configured on different channels in accordance with a pre-configured default rule or a rule pre-agreed with the UE through a protocol.

The determining the correspondence between the predetermined service characteristics and the SR resources configured on different channels includes: determining the correspondence between the predetermined service characteristics and the SR resources configured on different channels in accordance with a pre-generated configuration instruction about the correspondence between the predetermined service characteristics and the SR resources configured on different channels.

Prior to receiving the SR transmitted from the UE, the scheduling method further includes: transmitting a RRC message to the UE, so as to enable the UE to determine the SR resources configured by the base station for the UE on the PUCCH and the sPUCCH respectively in accordance with the RRC message.

The predetermined service characteristics include one or more of a QoS, a priority level and a delay requirement.

The predetermined service characteristics include a priority level and a delay requirement, and the first service characteristic includes a priority level and a delay requirement of the first service. The determining the scheduling policy for the UE in accordance with the first service characteristic includes: determining the quantity of resources allocated for the UE in accordance with the delay requirement of the first service; and determining whether the UE is to be scheduled preferentially in accordance with the priority level of the first service.

In still yet another aspect, a base station, including a second reception module is configured to receive a SR transmitted from a UE. After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels include a SR resource configured on a PUCCH and a SR resource configured on a sPUCCH.

The base station further includes: a fourth determination module configured to determine the correspondence between the predetermined service characteristics and the SR resources configured on different channels; a fifth determination module configured to determine the first service characteristic of the first service for triggering the SR in accordance with the correspondence and the SR resource through which the UE transmits the SR; and a scheduling policy determination module configured to determine a scheduling policy for the UE in accordance with the first service characteristic.

The fourth determination module includes: a third determination unit configured to determine the correspondence between the predetermined service characteristics and the SR resources configured on different channels in accordance with a pre-configured default rule or a rule pre-agreed with the UE through a protocol.

The fourth determination module includes a fourth determination unit configured to determine the correspondence between the predetermined service characteristics and the SR resources configured on different channels in accordance with a pre-generated configuration instruction about the correspondence between the predetermined service characteristics and the SR resources configured on different channels.

The base station further includes: a transmission module configured to transmit a RRC message to the UE, so as to enable the UE to determine the SR resources configured by the base station for the UE on the PUCCH and the sPUCCH respectively in accordance with the RRC message.

The predetermined service characteristics include one or more of a QoS, a priority level and a delay requirement.

The predetermined service characteristics comprise a priority level and a delay requirement, and the first service characteristic comprises the priority level and the delay requirement of the first service. The scheduling policy determination module comprises: a fifth determination unit configured to determine the quantity of resources allocated for the UE in accordance with the delay requirement of the first service; and a sixth determination unit configured to determine whether the UE is to be scheduled preferentially in accordance with the priority level of the first service.

In still yet another aspect, the present disclosure provides in some embodiments a UE, including a processor, a transceiver and a memory. The processor is configured to read a program stored in the memory, so as to: determine a correspondence between predetermined service characteristics and SR resources configured on different channels; determine a first service characteristic of a first service for triggering a SR when it is detected that the SR has been triggered; and select a SR resource corresponding to the first service characteristic in accordance with the first service characteristic and the correspondence, and transmit the SR through the selected SR resource. The SR resources configured on different channels comprise a SR resource configured on a PUCCH and a SR resource configured on a sPUCCH. The transceiver is configured to receive and transmit data. The memory is configured to store therein data for the operation of the processor.

In still yet another aspect, a processor, a transceiver and a memory are provided. The processor is configured to read a program stored in the memory, so as to receive a SR transmitted from a UE. After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels comprise a SR resource configured on a PUCCH and a SR resource configured on a sPUCCH. The transceiver is configured to receive and transmit data. The memory is configured to store therein data for the operation of the processor.

The beneficial technical effects of the above solutions are as follows. In the scheduling method of the embodiments of the present disclosure, the UE may determine the correspondence between the predetermined service characteristics and the SR resources configured on different channels, and the SR resources configured on different channels may include the SR resource configured on the PUCCH and the SR resource configured on the sPUCCH. When it is detected that the SR has been triggered, the UE may determine the first service characteristic of the first service for triggering the SR, and then select the SR resource corresponding to the first service characteristic in accordance with the first service characteristic and the correspondence and transmit the SR through the selected SR resource. As a result, it is able to coordinate the SR resources configured on the PUCCH and the sPUCCH in accordance with the service characteristic, meet the service requirement in a better manner and improve the scheduling performance of the entire system, thereby to solve the problem in the related art where there is no appropriate scheme for the transmission of the SR when the PUCCH and the sPUCCH coexist.

### BRIEF DESCRIPTION OF THE DRAWINGS

Fig.1 is a flow chart of a scheduling method for use in a UE according to some embodiments of the present disclosure;
Fig.2 is another flow chart of the scheduling method for use in the UE according to some embodiments of the present disclosure;
Fig.3 is yet another flow chart of the scheduling method for use in the UE according to some embodiments of the present disclosure;
Fig.4 is a flow chart of a scheduling method for use in a base station according to some embodiments of the present disclosure;
Fig.5 is another flow chart of the scheduling method for use in the base station according to some embodiments of the present disclosure;
Fig.6 is yet another flow chart of the scheduling method for use in the base station according to some embodiments of the present disclosure;
Fig.7 is a schematic view showing the UE according to some embodiments of the present disclosure;
Fig.8 is a schematic view showing the base station according to some embodiments of the present disclosure;
Fig.9 is another schematic view showing the UE according to some embodiments of the present disclosure; and
Fig.10 is another schematic view showing the base station according to some embodiments of the present disclosure.

### DETAILED DESCRIPTION OF THE EMBODIMENTS

In order to make the objects, the technical solutions and the advantages of the present disclosure more apparent, the present disclosure will be described hereinafter in a detailed manner in conjunction with the drawings and embodiments.

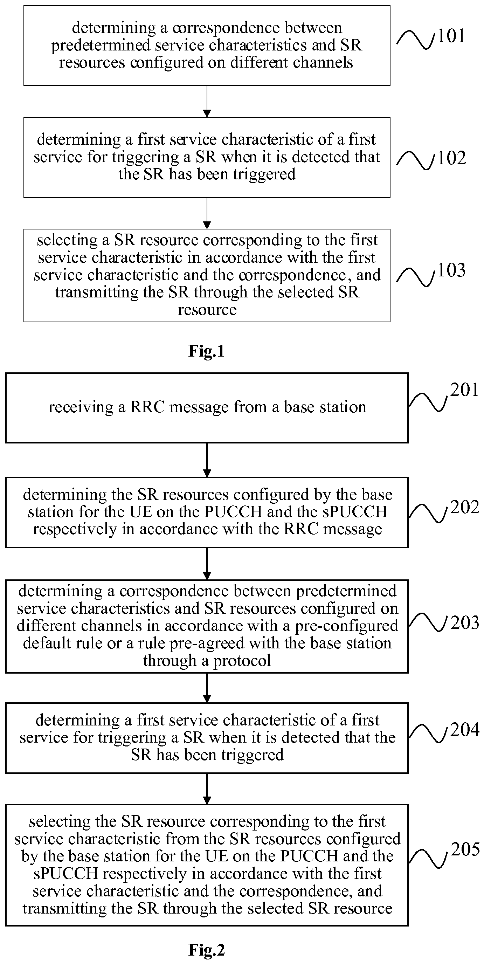

As shown in Fig.1, the present disclosure provides in some embodiments a scheduling method for use in a UE, which includes the following steps.

Step 101: determining a correspondence between predetermined service characteristics and SR resources configured on different channels. The SR resources configured on different channels include a SR resource configured on a PUCCH and a SR resource configured on a sPUCCH.

Here, the UE may at first determine the correspondence between the predetermined service characteristics and the SR resources configured on different channels, so as to select an appropriate SR resource in accordance with the correspondence.

Step 102: determining a first service characteristic of a first service for triggering a SR when it is detected that the SR has been triggered.

Here, when the UE has detected that the SR has been triggered, the UE may determine the first service characteristic of the first service for triggering the SR, and then select the SR resource capable of meeting the first service characteristic of the first service in accordance with the correspondence.

Step 103: selecting a SR resource corresponding to the first service characteristic in accordance with the first service characteristic and the correspondence, and transmitting the SR through the selected SR resource.

Here, the UE may select the SR resource corresponding to the first service characteristic in accordance with the first service characteristic and the correspondence, as the SR resource for the transmission of the SR. For example, the UE may select the SR resource configured on the sPUCCH corresponding to a short TTI, or the SR resource configured on the PUCCH corresponding to a TTI of 1ms. In this way, it is able to coordinate the SR resources configured on the PUCCH and the sPUCCH in accordance with the service characteristic, thereby to fully meet the service requirement.

According to the scheduling method in the embodiments of the present disclosure, the UE may select the appropriate SR resource for the transmission of the SR in accordance with the correspondence between the predetermined service characteristics and the SR resources configured on different channels, and transmit the SR through the selected SR resource. As a result, it is able to meet the service requirement in a better manner, and improve the scheduling performance of the entire system, thereby to solve the problem in the related art where there is no appropriate scheme for the transmission of the SR when the PUCCH and the sPUCCH coexist.

The predetermined service characteristics may include one or more of a QoS, a priority level and a delay requirement.

At this time, the SR resource may be selected in accordance with the correspondence between the QoS, the priority level or the delay requirement and the SR resources configured on different channels, so as to transmit the SR while fully meeting the service requirements on different services, thereby to improve the scheduling performance of the entire system.

For example, based on the above correspondence, for a SR triggered by a service having a high delay requirement or a high priority level, the SR resource configured on the sPUCCH corresponding to a short TTI may be selected, and for another SR, the SR resource configured on the PUCCH corresponding to a TTI of 1ms may be selected. When the first service for triggering the SR determined in Step 102 has a high priority level, the SR resource configured on the sPUCCH corresponding to the short TTI may be selected.

It should be appreciated that, the predetermined service characteristics may not be limited to the QoS, the priority level and the delay requirement, and the correspondence between the other service characteristics and the SR resources configured on different channels may also be determined according to the need, which will not be particularly defined herein.

According to the scheduling method in the embodiments of the present disclosure, the UE may select the appropriate SR resources for the transmission of the SR in accordance with the correspondence between the service characteristic such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

As shown in Fig.2, the present disclosure further provides in some embodiments a scheduling method for use in a UE, which includes the following steps.

Step 201: receiving a RRC message from a base station.

Here, the base station may configure the SR resources for the UE on a PUCCH and a sPUCCH through a RRC signaling. The SR resource on the sPUCCH may be configured only when an uplink short TTI function has been activated.

Step 202: determining the SR resources configured by the base station for the UE on the PUCCH and the sPUCCH respectively in accordance with the RRC message.

Here, the UE may determine the dedicated SR resources configured by the base station for the UE in accordance with the RRC message.

Step 203: determining a correspondence between predetermined service characteristics and SR resources configured on different channels in accordance with a pre-configured default rule or a rule pre-agreed with the base station through a protocol.

The SR resources configured on different channels may include a SR resource configured on the PUCCH and a SR resource configured on the sPUCCH.

Here, the UE may determine the correspondence between the predetermined service characteristics and the SR resources configured on different channels in accordance with the default rule or the rule agreed through the protocol, so as to select an appropriate SR resource in accordance with the correspondence.

Step 204: determining a first service characteristic of a first service for triggering a SR when it is detected that the SR has been triggered.

Here, when the UE has detected that the SR has been triggered, it may determine the first service characteristic of the first service for triggering the SR, and then select the SR resource capable of meeting the first service characteristic of the first service in accordance with the correspondence and the determined first service characteristic.

Step 205: selecting the SR resource corresponding to the first service characteristic from the SR resources configured by the base station for the UE on the PUCCH and the sPUCCH respectively in accordance with the first service characteristic and the correspondence, and transmitting the SR through the selected SR resource.

Here, the UE may select the SR resource corresponding to the first service characteristic from the dedicated SR resources configured by the base station for the UE in accordance with the first service characteristic and the correspondence, as the SR resource for the transmission of the SR. For example, it may select the SR resource configured on the sPUCCH corresponding to a short TTI, or the SR resource configured on the PUCCH corresponding to a TTI of 1ms. In this way, it is able to coordinate the SR resources configured on the PUCCH and the sPUCCH in accordance with the service characteristic, thereby to fully meet the service requirement.

According to the scheduling method in the embodiments of the present disclosure, the UE may select the appropriate SR resource from the dedicated SR resources configured by the base station for the UE for the transmission of the SR in accordance with the correspondence between the predetermined service characteristics and the SR resources configured on different channels. As a result, it is able to meet the service requirement in a better manner, and improve the scheduling performance of the entire system, thereby to solve the problem in the related art where there is no appropriate scheme for the transmission of the SR when the PUCCH and the sPUCCH coexist.

The predetermined service characteristics may include one or more of a QoS, a priority level and a delay requirement.

At this time, the SR resource may be selected in accordance with the correspondence between the QoS, the priority level or the delay requirement and the SR resources configured on different channels, so as to transmit the SR while fully meeting the service requirements on different services, thereby to improve the scheduling performance of the entire system.

It should be appreciated that, the predetermined service characteristics may not be limited to the QoS, the priority level and the delay requirement, and the correspondence between the other service characteristics and the SR resources configured on different channels may also be determined according to the need, which will not be particularly defined herein.

For example, based on the above correspondence, for a SR triggered by a service having a high delay requirement or a high priority level, the SR resource configured on the sPUCCH corresponding to the short TTI may be selected, and for another SR, the SR resource configured on the PUCCH corresponding to the TTI of 1ms may be selected. When the first service for triggering the SR determined in Step 204 has a high priority level, the SR resource configured on the sPUCCH corresponding to the short TTI may be selected.

It should be appreciated that, the above correspondence is for illustrative purposes only, and the correspondence may be established in another mode, as long as the service requirements on different services may be met, which will not be particularly defined herein.

In addition, in Step 204, when there is a plurality of services for triggering the SR, a service having a highest priority level or a highest delay requirement may be selected as the first service, and then the service characteristic of the service having the highest priority level or the highest delay requirement may be determined.

According to the scheduling method in the embodiments of the present disclosure, the UE may select the appropriate SR resources from the dedicated SR resources configured by the base station for the UE for the transmission of the SR in accordance with the correspondence between the service characteristics such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

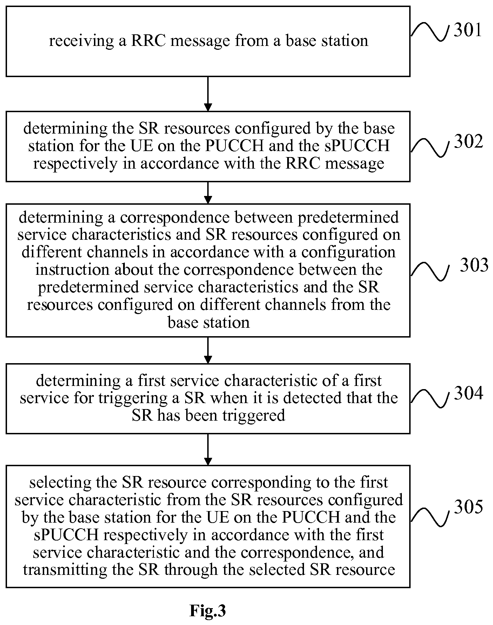

As shown in Fig.3, the present disclosure further provides in some embodiments a scheduling method for use in a UE, which includes the following steps.

Step 301: receiving a RRC message from a base station.

Here, the base station may configure the SR resources for the UE on a PUCCH and a sPUCCH through RRC signaling. The SR resource on the sPUCCH may be configured only when an uplink short TTI function has been activated.

Step 302: determining the SR resources configured by the base station for the UE on the PUCCH and the sPUCCH respectively in accordance with the RRC message.

Here, the UE may determine the dedicated SR resources configured by the base station for the UE in accordance with the RRC message.

Step 303: determining a correspondence between predetermined service characteristics and SR resources configured on different channels in accordance with a configuration instruction about the correspondence between the predetermined service characteristics and the SR resources configured on different channels from the base station.

The SR resources configured on different channels may include a SR resource configured on the PUCCH and a SR resource configured on the sPUCCH.

Here, the base station may configure the correspondence between the predetermined service characteristics and the SR resources configured on different channels, and the UE may determine the correspondence in accordance with the configuration instruction received by the UE from the base station, so as to select an appropriate SR resource in accordance with the correspondence.

Step 304: determining a first service characteristic of a first service for triggering a SR when it is detected that the SR has been triggered.

Here, when the UE has detected that the SR has been triggered, it may determine the first service characteristic of the first service for triggering the SR, and then select the SR resource capable of meeting the first service characteristic of the first service in accordance with the correspondence and the determined first service characteristic.

Step 305: selecting the SR resource corresponding to the first service characteristic from the SR resources configured by the base station for the UE on the PUCCH and the sPUCCH respectively in accordance with the first service characteristic and the correspondence, and transmitting the SR through the selected SR resource.

Here, the UE may select the SR resource corresponding to the first service characteristic from the dedicated SR resources configured by the base station for the UE in accordance with the first service characteristic and the correspondence, as the SR resource for the transmission of the SR. For example, it may select the SR resource configured on the sPUCCH corresponding to a short TTI, or the SR resource configured on the PUCCH corresponding to a TTI of 1ms. In this way, it is able to coordinate the SR resources configured on the PUCCH and the sPUCCH in accordance with the service characteristic, thereby to fully meet the service requirement.

According to the scheduling method in the embodiments of the present disclosure, the UE may select the appropriate SR resource from the dedicated SR resources configured by the base station for the UE for the transmission of the SR in accordance with the correspondence between the predetermined service characteristics and the SR resources configured on different channels. As a result, it is able to meet the service requirement in a better manner, and improve the scheduling performance of the entire system, thereby to solve the problem in the related art where there is no appropriate scheme for the transmission of the SR when the PUCCH and the sPUCCH coexist.

The predetermined service characteristics may include one or more of a QoS, a priority level and a delay requirement.

At this time, the SR resource may be selected in accordance with the correspondence between the QoS, the priority level or the delay requirement and the SR resources configured on different channels, so as to transmit the SR while fully meeting the service requirements on different services, thereby to improve the scheduling performance of the entire system.

It should be appreciated that, the predetermined service characteristics may not be limited to the QoS, the priority level and the delay requirement, and the correspondence between the other service characteristics and the SR resources configured on different channels may also be determined according to the need, which will not be particularly defined herein.

For example, based on the above correspondence, for a SR triggered by a service having a high delay requirement or a high priority level, the SR resource configured on the sPUCCH corresponding to the short TTI may be selected, and for another SR, the SR resource configured on the PUCCH corresponding to the TTI of 1ms may be selected. When the first service for triggering the SR determined in Step 304 has a high priority level, the SR resource configured on the sPUCCH corresponding to the short TTI may be selected.

It should be appreciated that, the above correspondence is for illustrative purposes only, and the correspondence may be established in another mode, as long as the service requirements on different services may be met, which will not be particularly defined herein.

In addition, in Step 304, when there is a plurality of services for triggering the SR, a service having a highest priority level or a highest delay requirement may be selected as the first service, and then the service characteristic of the service having the highest priority level or the highest delay requirement may be determined.

According to the scheduling method in the embodiments of the present disclosure, the UE may select the appropriate SR resources from the dedicated SR resources configured by the base station for the UE for the transmission of the SR in accordance with the correspondence between the service characteristics such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

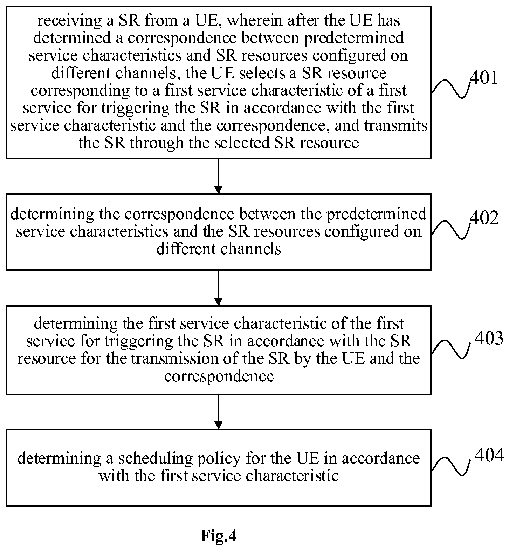

As shown in Fig.4, a scheduling method for use in a base station includes Step 401 of receiving a SR from a UE. After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels include a SR resource configured on a PUCCH and a SR resource configured on a sPUCCH.

Here, the SR received by the base station from the UE may be a SR transmitted through the SR resource corresponding to the first service characteristic and selected by the UE in accordance with the first service characteristic of the first service and the correspondence between the service characteristics and the SR resources configured on different channels. For example, a SR resource configured on the sPUCCH corresponding to a short TTI or a SR resource configured on the PUCCH corresponding to a TTI of 1ms may be selected. In this way, it is able to coordinate the SR resources configured on the PUCCH and the sPUCCH in accordance with the service characteristic, thereby to fully meet the service requirements on different services.

According to the scheduling method, the UE may select the appropriate SR resource for the transmission of the SR in accordance with the correspondence between the predetermined service characteristics and the SR resources configured on different channels. As a result, it is able to meet the service requirement in a better manner, and improve the scheduling performance of the entire system, thereby to solve the problem in the related art where there is no appropriate scheme for the transmission of the SR when the PUCCH and the sPUCCH coexist.

Subsequent to Step 401, the scheduling method may further include the following steps.

Step 402: determining the correspondence between the predetermined service characteristics and the SR resources configured on different channels.

Here, the base station may determine the correspondence between the predetermined service characteristics and the SR resources configured on different channels, so as to determine the service characteristic of the service for triggering the SR in accordance with the correspondence.

Step 403: determining the first service characteristic of the first service for triggering the SR in accordance with the SR resource for the transmission of the SR by the UE and the correspondence.

Here, the base station may accurately determine the first service characteristic of the first service for triggering the SR in accordance with the SR resource for the transmission of the SR by the UE and the correspondence.

Step 404: determining a scheduling policy for the UE in accordance with the first service characteristic.

Here, the base station may determine the scheduling policy for the UE in accordance with the first service characteristic of the first service for triggering the SR, so as to fully meet the service requirement of the UE and improve the entire scheduling performance.

At this time, the base station may determine the service characteristic of the service for triggering the SR in accordance with the SR resource selected by the UE, and determine the scheduling policy in accordance with the service characteristic, so as to improve the entire scheduling performance.

The predetermined service characteristics may include one or more of a QoS, a priority level and a delay requirement.

At this time, the SR resource may be selected by the UE in accordance with the correspondence between the QoS, the priority level or the delay requirement and the SR resources configured on different channels, so as to transmit the SR while fully meeting the service requirements on different services, thereby to improve the scheduling performance of the entire system. The base station may determine the QoS, the priority level or the delay requirement of the service for triggering the SR in accordance with the correspondence between the QoS, the priority level or the delay requirement and the SR resources configured on different channels, and determine the scheduling policy in accordance with the determined service characteristic, so as to enable the scheduling policy to fully meet the service requirements on different services, thereby to improve the scheduling performance of the entire system.

It should be appreciated that, the predetermined service characteristics may not be limited to the QoS, the priority level and the delay requirement, and the correspondence between the other service characteristics and the SR resources configured on different channels may also be determined according to the need, which will not be particularly defined herein.

The predetermined service characteristics may include priority level and delay requirement, and the first service characteristic may include a priority level and a delay requirement of the first service. Step 404 may include the following steps.

Step 4041: determining the quantity of resources allocated for the UE in accordance with the delay requirement of the first service.

Here, sufficient resources may be allocated directly for a service having a high delay requirement to carry data, so as to omit a BSR process, thereby to reduce the service transmission delay.

Step 4042: determining whether the UE is to be scheduled preferentially in accordance with the priority level of the first service.

Here, a service having a high priority level may be scheduled preferentially, so as to ensure that the resource is allocated for the service having the high priority level preferentially.

At this time, the scheduling policy may be determined for the UE in accordance with the delay requirement and the priority level, so as to meet the service requirements on different services, thereby to improve the scheduling performance of the entire system.

According to the scheduling method, the UE may select the appropriate SR resources for the transmission of the SR in accordance with the correspondence between the service characteristics such as the QoS, the priority level or the delay requirement and the SR resources configured on different channels. The base station may determine the scheduling policy for the UE in accordance with the correspondence between the service characteristics such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

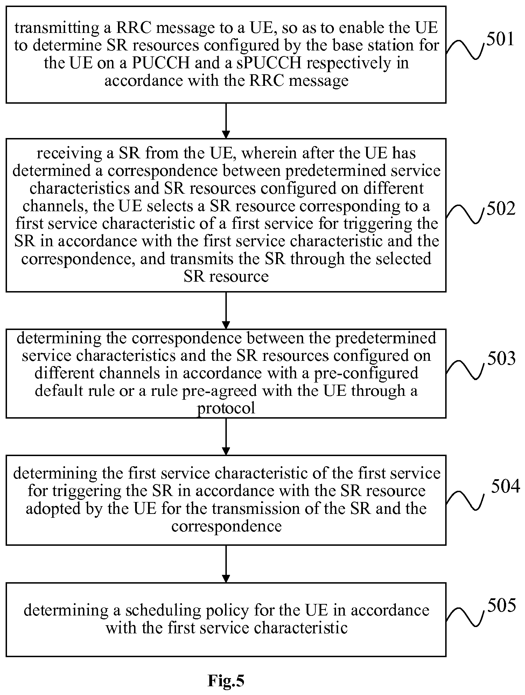

As shown in Fig.5, a scheduling method for use in a base station includes the following steps.

Step 501: transmitting a RRC message to a UE, so as to enable the UE to determine SR resources configured by the base station for the UE on a PUCCH and a sPUCCH respectively in accordance with the RRC message.

Here, the base station may configure the SR resources for the UE on the PUCCH and the sPUCCH through RRC signaling. The SR resource on the sPUCCH may be configured only when an uplink short TTI function has been activated.

Step 502: receiving a SR from the UE.

After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels may include a SR resource configured on the PUCCH and a SR resource configured on the sPUCCH.

Here, the SR received by the base station from the UE may be a SR transmitted through the SR resource corresponding to the first service characteristic and selected by the UE from the dedicated SR resources configured by the base station for the UE in accordance with the first service characteristic of the first service and the correspondence between the service characteristics and the SR resources configured on different channels. For example, a SR resource configured on the sPUCCH corresponding to a short TTI or a SR resource configured on the PUCCH corresponding to a TTI of 1ms may be selected. In this way, it is able to coordinate the SR resources configured on the PUCCH and the sPUCCH in accordance with the service characteristic, thereby to fully meet the service requirements on services.

Step 503: determining the correspondence between the predetermined service characteristics and the SR resources configured on different channels in accordance with a pre-configured default rule or a rule pre-agreed with the UE through a protocol.

Here, the base station may determine the correspondence between the predetermined service characteristics and the SR resources configured on different channels in accordance with the default rule or the rule agreed through the protocol, so as to determine the service characteristic of the service for triggering the SR in accordance with the correspondence.

Step 504: determining the first service characteristic of the first service for triggering the SR in accordance with the SR resource adopted by the UE for the transmission of the SR and the correspondence.

Here, the base station may accurately determine the first service characteristic of the first service for triggering the SR in accordance with the SR resource adopted by the UE for the transmission of the SR and the correspondence.

Step 505: determining a scheduling policy for the UE in accordance with the first service characteristic.

Here, the base station may determine the scheduling policy for the UE in accordance with the first service characteristic of the first service for triggering the SR, so as to fully meet the service requirement and improve the scheduling performance.

The UE may select the appropriate SR resources for the transmission of the SR from the dedicated SR resources configured by the base station for the UE in accordance with the correspondence between the predetermined service characteristics and the SR resources configured on different channels. The base station may determine the scheduling policy for the UE in accordance with the correspondence between the predetermined service characteristics and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

The predetermined service characteristics may include one or more of a QoS, a priority level and a delay requirement.

At this time, the SR resource may be selected by the UE by determining the correspondence between the QoS, the priority level or the delay requirement and the SR resources configured on different channels, so as to transmit the SR while fully meeting the service requirements on different services, thereby to improve the scheduling performance of the entire system. The base station may determine the QoS, the priority level or the delay requirement of the service for triggering the SR in accordance with the correspondence between the QoS, the priority level or the delay requirement and the SR resources configured on different channels, and determine the scheduling policy in accordance with the determined service characteristic, so as to enable the scheduling policy to fully meet the service requirements on different services, thereby to improve the scheduling performance of the entire system.

It should be appreciated that, the predetermined service characteristics may not be limited to the QoS, the priority level and the delay requirement, and the correspondence between the other service characteristics and the SR resources configured on different channels may also be determined according to the need, which will not be particularly defined herein.

The predetermined service characteristics may include priority level and delay requirement, and the first service characteristic may include a priority level and a delay requirement of the first service. Step 505 may include the following steps.

Step 5051: determining the quantity of resources allocated for the UE in accordance with the delay requirement of the first service.

Here, sufficient resources may be allocated directly for a service having a high delay requirement to carry data, so as to omit a BSR process, thereby to reduce the service transmission delay.

Step 5052: determining whether the UE is to be scheduled preferentially in accordance with the priority level of the first service.

Here, a service having a high priority level may be scheduled preferentially, so as to ensure that the resource is allocated for the service having the high priority level preferentially.

At this time, the scheduling policy may be determined for the UE in accordance with the delay requirement and the priority level, so as to meet the service requirements on different services, thereby to improve the scheduling performance of the entire system.

The UE may select the appropriate SR resource from the dedicated SR resources configured by the base station for the UE for the transmission of the SR in accordance with the correspondence between the service characteristics such as the QoS, the priority level or the delay requirement and the SR resources configured on different channels. The base station may determine the scheduling policy for the UE in accordance with the correspondence between the service characteristics such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

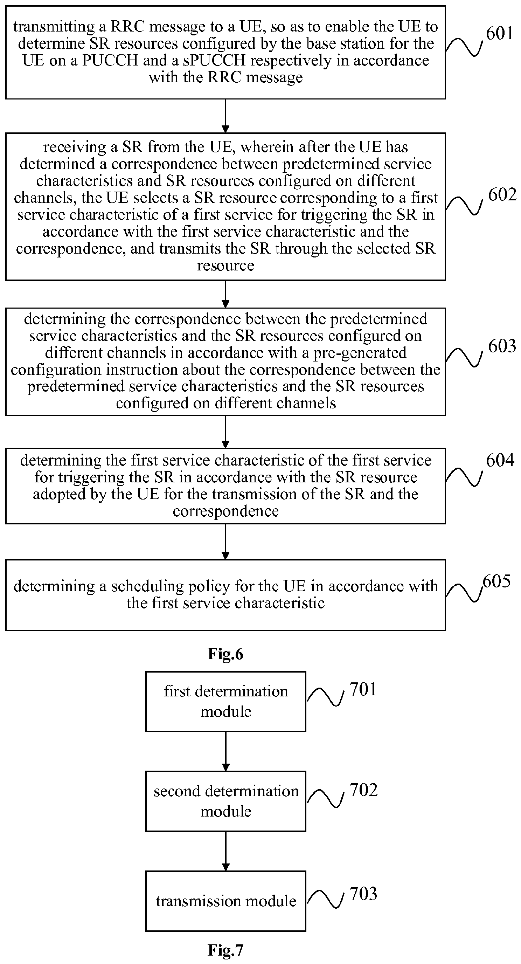

As shown in Fig.6, a scheduling method for use in a base station includes the following steps.

Step 601: transmitting a RRC message to a UE, so as to enable the UE to determine SR resources configured by the base station for the UE on a PUCCH and a sPUCCH respectively in accordance with the RRC message.

Here, the base station may configure the SR resources for the UE on the PUCCH and the sPUCCH through RRC signaling. The SR resource on the sPUCCH may be configured only when an uplink short TTI function has been activated.

Step 602: receiving a SR from the UE.

After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels may include a SR resource configured on the PUCCH and a SR resource configured on the sPUCCH.

Here, the SR received by the base station from the UE may be a SR transmitted through the SR resource corresponding to the first service characteristic and selected by the UE from the dedicated SR resources configured by the base station for the UE in accordance with the first service characteristic of the first service and the correspondence between the service characteristics and the SR resources configured on different channels. For example, a SR resource configured on the sPUCCH corresponding to a short TTI or a SR resource configured on the PUCCH corresponding to a TTI of 1ms may be selected. In this way, it is able to coordinate the SR resources configured on the PUCCH and the sPUCCH in accordance with the service characteristic, thereby to fully meet the service requirements on services.

Step 603: determining the correspondence between the predetermined service characteristics and the SR resources configured on different channels in accordance with a pre-generated configuration instruction about the correspondence between the predetermined service characteristics and the SR resources configured on different channels.

Here, the base station may configure the correspondence between the predetermined service characteristics and the SR resources configured on different channels, and determine the correspondence between the predetermined service characteristics and the SR resources configured on different channels in accordance with the configuration instruction, so as to determine the service characteristic of the service for triggering the SR in accordance with the correspondence.

Step 604: determining the first service characteristic of the first service for triggering the SR in accordance with the SR resource adopted by the UE for the transmission of the SR and the correspondence.

Here, the base station may accurately determine the first service characteristic of the first service for triggering the SR in accordance with the SR resource adopted by the UE for the transmission of the SR and the correspondence.

Step 605: determining a scheduling policy for the UE in accordance with the first service characteristic.

Here, the base station may determine the scheduling policy for the UE in accordance with the first service characteristic of the first service for triggering the SR, so as to fully meet the service requirement of the UE and improve the scheduling performance.

The UE may select the appropriate SR resources for the transmission of the SR from the dedicated SR resources configured by the base station for the UE in accordance with the correspondence between the predetermined service characteristics and the SR resources configured on different channels. The base station may determine the scheduling policy for the UE in accordance with the correspondence between the predetermined service characteristics and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

The predetermined service characteristics may include one or more of a QoS, a priority level and a delay requirement.

At this time, the SR resource may be selected by the UE by determining the correspondence between the QoS, the priority level or the delay requirement and the SR resources configured on different channels, so as to transmit the SR while fully meeting the service requirements on different services, thereby to improve the scheduling performance of the entire system. The base station may determine the QoS, the priority level or the delay requirement of the service for triggering the SR by determining the correspondence between the QoS, the priority level or the delay requirement and the SR resources configured on different channels, and determine the scheduling policy in accordance with the determined service characteristic, so as to enable the scheduling policy to fully meet the service requirements on different services, thereby to improve the scheduling performance of the entire system.

It should be appreciated that, the predetermined service characteristics may not be limited to the QoS, the priority level and the delay requirement, and the correspondence between the other service characteristics and the SR resources configured on different channels may also be determined according to the need, which will not be particularly defined herein.

The predetermined service characteristics may include priority level and delay requirement, and the first service characteristic may include a priority level and a delay requirement of the first service. Step 605 may include the following steps.

Step 6051: determining the quantity of resources allocated for the UE in accordance with the delay requirement of the first service.

Here, sufficient resources may be allocated directly for a service having a high delay requirement to carry data, so as to omit a BSR process, thereby to reduce the service transmission delay.

Step 6052: determining whether the UE is to be scheduled preferentially in accordance with the priority level of the first service.

Here, a service having a high priority level may be scheduled preferentially, so as to ensure that the resource is allocated for the service having the high priority level preferentially.

At this time, the scheduling policy may be determined for the UE in accordance with the delay requirement and the priority level, so as to meet the service requirements on different services, thereby to improve the scheduling performance of the entire system.

The UE may select the appropriate SR resource from the dedicated SR resources configured by the base station for the UE for the transmission of the SR in accordance with the correspondence between the service characteristic such as the QoS, the priority level or the delay requirement and the SR resources configured on different channels. The base station may determine the scheduling policy for the UE in accordance with the correspondence between the service characteristics such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

As shown in Fig.7, a UE includes: a first determination module 701 configured to determine a correspondence between predetermined service characteristics and SR resources configured on different channels; a second determination module 702 configured to determine a first service characteristic of a first service for triggering a SR when it is detected that the SR has been triggered; and a transmission module 703 configured to select a SR resource corresponding to the first service characteristic in accordance with the first service characteristic and the correspondence, and transmit the SR through the selected SR resource. The SR resources configured on different channels include a SR resource configured on a PUCCH and a SR resource configured on a sPUCCH.

The UE may select the appropriate SR resource for the transmission of the SR in accordance with the correspondence between the predetermined service characteristics and the SR resources configured on different channels. As a result, it is able to meet the service requirement in a better manner, and improve the scheduling performance of the entire system, thereby to solve the problem in the related art where there is no appropriate scheme for the transmission of the SR when the PUCCH and the sPUCCH coexist.

The first determination module 701 may include a first determination unit 7011 configured to determine the correspondence between the predetermined service characteristics and the SR resources configured on different channels in accordance with a pre-configured default rule or a rule pre-agreed with a base station through a protocol.

The first determination module 701 may include a second determination unit 7012 configured to determine the correspondence between the predetermined service characteristics and the SR resources configured on different channels in accordance with a configuration instruction about the correspondence between the predetermined service characteristics and the SR resources configured on different channels from the base station.

The UE may further include: a first reception module 704 configured to receive a RRC message from the base station; and a third determination module 705 configured to determine the SR resources configured by the base station for the UE on the PUCCH and the sPUCCH respectively in accordance with the RRC message.

The transmission module 703 may include a transmission unit 7031 configured to select the SR resource corresponding to the first service characteristic from the SR resources configured by the base station for the UE on the PUCCH and the sPUCCH respectively in accordance with the first service characteristic and the correspondence, and transmit the SR through the selected SR resource.

The predetermined service characteristics may include one or more of a QoS, a priority level and a delay requirement.

The UE may select the appropriate SR resources from the dedicated SR resources configured by the base station for the UE for the transmission of the SR in accordance with the correspondence between the service characteristic such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

It should be appreciated that, the UE in the embodiments of the present disclosure may be adopted to implement the steps of the scheduling method in Figs.1-3, i.e., the implementation of the UE may refer to the implementation of the scheduling method in Figs. 1-3 mentioned hereinabove with a same technical effect.

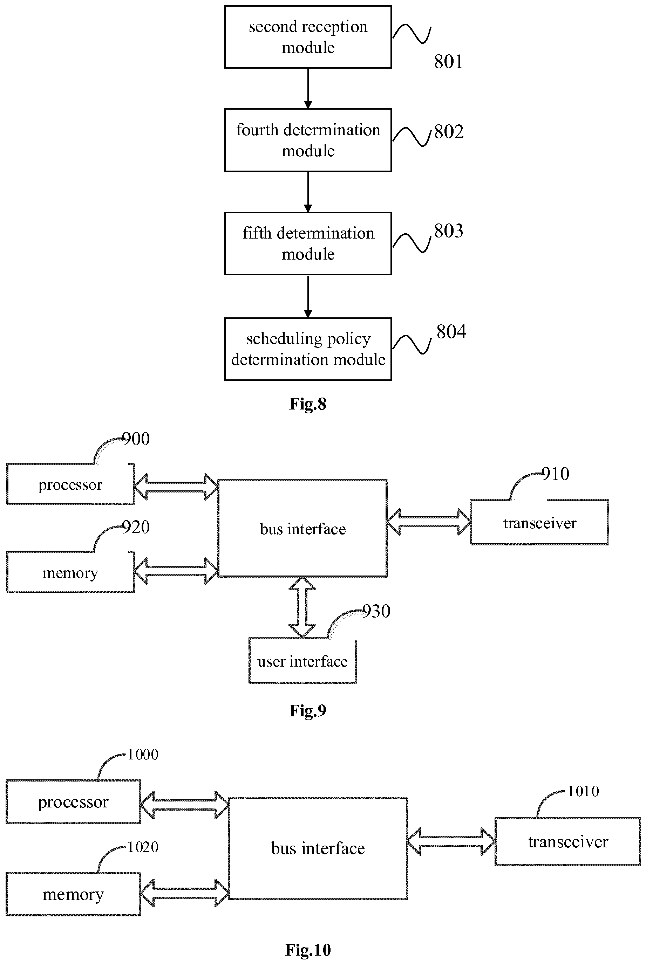

As shown in Fig.8, a base station includes a second reception module 801 configured to receive a SR from a UE. After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels may include a SR resource configured on a PUCCH and a SR resource configured on a sPUCCH.

According to the base station, the UE may select the appropriate SR resource for the transmission of the SR in accordance with the correspondence between the predetermined service characteristics and the SR resources configured on different channels. As a result, it is able to meet the service requirement in a better manner, and improve the scheduling performance of the entire system, thereby to solve the problem in the related art where there is no appropriate scheme for the transmission of the SR when the PUCCH and the sPUCCH coexist.

The base station may further include: a fourth determination module 802 configured to determine the correspondence between the predetermined service characteristics and the SR resources configured on different channels; a fifth determination module 803 configured to determine the first service characteristic of the first service for triggering the SR in accordance the SR resource through which the UE transmits the SR and the correspondence; and a scheduling policy determination module 804 configured to determine a scheduling policy for the UE in accordance with the first service characteristic.

The fourth determination module 802 may include a third determination unit configured to determine the correspondence between the predetermined service characteristics and the SR resources configured on different channels in accordance with a pre-configured default rule or a rule pre-agreed with the UE through a protocol.

The fourth determination module 802 may include a fourth determination unit configured to determine the correspondence between the predetermined service characteristics and the SR resources configured on different channels in accordance with a pre-generated configuration instruction about the correspondence between the predetermined service characteristics and the SR resources configured on different channels.

The base station may further include a transmission module 805 configured to transmit a RRC message to the UE, so as to enable the UE to determine the SR resources configured by the base station for the UE on the PUCCH and the sPUCCH respectively in accordance with the RRC message.

The predetermined service characteristics may include one or more of a QoS, a priority level and a delay requirement.

The predetermined service characteristics may include the priority level and the delay requirement, and the first service characteristic may include a priority level and a delay requirement of the first service. The scheduling policy determination module 804 may include: a fifth determination unit configured to determine the quantity of resources allocated for the UE in accordance with the delay requirement of the first service; and a sixth determination unit configured to determine whether the UE is to be scheduled preferentially in accordance with the priority level of the first service.

The UE may select the appropriate SR resources for the transmission of the SR from the dedicated SR resources configured by the base station for the UE in accordance with the correspondence between the service characteristic such as the QoS, the priority level or the delay requirement and the SR resources configured on different channels. The base station may determine the scheduling policy for the UE in accordance with the correspondence between the service characteristic such as the QoS, the priority level or the delay requirement and the SR resources configured on different channels. As a result, it is able to meet the service requirement in a better manner and improve the scheduling performance of the entire system, thereby to solve the problem in the related art where there is no appropriate scheme for the transmission of the SR when the PUCCH and the sPUCCH coexist.

It should be appreciated that, the base station in the embodiments of the present disclosure may be adopted to implement the steps of the scheduling method in Figs.4-6, i.e., the implementation of the base station may refer to the implementation of the scheduling method in Figs.4-6 mentioned hereinabove with a same technical effect.

As shown in Fig.9, a UE includes a processor 900, a transceiver 910, a memory 920, a user interface 930 and a bus interface. The processor 900, the transceiver 910, the memory 920 and the user interface 930 may be connected to the bus interface. The processor 900 is configured to read a program stored in the memory 920, so as to: determine a correspondence between predetermined service characteristics and SR resources configured on different channels; determine a first service characteristic of a first service for triggering a SR when it is detected that the SR has been triggered; and select a SR resource corresponding to the first service characteristic in accordance with the first service characteristic and the correspondence, and transmit through the transceiver 910 the SR through the selected SR resource. The SR resources configured on different channels include a SR resource configured on a PUCCH and a SR resource configured on a sPUCCH.

In Fig.9, bus architecture may include a number of buses and bridges connected to each other, so as to connect various circuits for one or more processors such as the processor 900 and one or more memories such as the memory 920. In addition, as is known in the art, the bus architecture may be used to connect various other circuits, such as a circuit for a peripheral device, a circuit for a voltage stabilizer and a power management circuit, which are not particularly defined herein. The bus interface may be provided, and the transceiver 910 may consist of a plurality of elements, i.e., a transmitter and a receiver for communication with various other devices over a transmission medium. With respect to different UEs, the user interface 930 may also be provided for connecting devices which are to be arranged inside or outside the UE, and these devices may include but not limited to a keypad, a display, a speaker, a microphone and a joystick. The processor 900 may take charge of managing the bus architecture as well general processings. The memory 920 may store data therein for the operation of the processor 900.

It should be appreciated that, the UE may be adopted to implement the steps of the scheduling method in Figs.1-3, i.e., the implementation of the UE may refer to the implementation of the scheduling method in Figs. 1-3 mentioned hereinabove with a same technical effect.

As shown in Fig.10, a base station includes a processor 1000, a transceiver 1010, a memory 1020 and a bus interface. The processor 1000, the transceiver 1010 and the memory 1020 may be connected to the bus interface. The processor 1000 is configured to read a program stored in the memory 1020, so as to receive through the transceiver 1010 a SR from a UE. After the UE has determined a correspondence between predetermined service characteristics and SR resources configured on different channels, the UE selects a SR resource corresponding to a first service characteristic of a first service for triggering the SR in accordance with the first service characteristic and the correspondence, and transmits the SR through the selected SR resource. The SR resources configured on different channels include a SR resource configured on a PUCCH and a SR resource configured on a sPUCCH.

In Fig.10, bus architecture may include a number of buses and bridges connected to each other, so as to connect various circuits for one or more processors such as the processor 1000 and one or more memories such as the memory 1020. In addition, as is known in the art, the bus architecture may be used to connect various other circuits, such as a circuit for a peripheral device, a circuit for a voltage stabilizer and a power management circuit, which are not particularly defined herein. The bus interface may be provided, and the transceiver 1010 may consist of a plurality of elements, i.e., a transmitter and a receiver for communication with various other devices over a transmission medium. The processor 1000 may take charge of managing the bus architecture as well general processings. The memory 1020 may store data therein for the operation of the processor 1000.

The processor 1000 may take charge of managing the bus architecture as well general processings. The memory 1020 may store data therein for the operation of the processor 1000.

It should be appreciated that, the base station may be adopted to implement the steps of the scheduling method in Figs.4-6, i.e., the implementation of the base station may refer to the implementation of the scheduling method in Figs.4-6 mentioned hereinabove with a same technical effect.

It should be further appreciated that serial numbers of the steps shall not be used to define the order of the steps, and instead, the order of the steps shall be determined in accordance with their functions and internal logics.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or a processor of another programmable data processing device to create a machine, so that instructions executable by the processor of the computer or the processor of the other programmable data processing device may create a device to achieve the functions assigned in one or more work flows in the flow chart and/or one or more blocks in the block diagram.

These computer program instructions may also be stored in a computer readable storage that may guide the computer or the other programmable data process device to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process device, so that a series of operation steps are executed on the computer or the other programmable device to create processes achieved by the computer. Therefore, the instructions executed in the computer or the other programmable device provide the steps for achieving the function assigned in one or more flows in the flow chart and/or one or more blocks in the block diagram.

## Claims

1. A scheduling method for use in a User Equipment, UE, comprising:
determining a correspondence between predetermined service characteristics and Scheduling Request, SR, resources configured on different channels (101);
determining a first service characteristic of a first service for triggering a SR when it is detected that the SR has been triggered (102, 204, 304); and
**characterized in that** the scheduling method further comprises: selecting a SR resource corresponding to the first service characteristic in accordance with the first service characteristic and the correspondence, and transmitting the SR through the selected SR resource (103),
wherein the SR resources configured on the different channels comprise a SR resource configured on a Physical Uplink Control Channel, PUCCH, and a SR resource configured on a short Physical Uplink Control Channel, sPUCCH.

2. The scheduling method according to claim 1, wherein the determining the correspondence between the predetermined service characteristics and the SR resources configured on different channels comprises:
determining the correspondence between the predetermined service characteristics and the SR resources configured on different channels in accordance with a pre-configured default rule or a rule pre-agreed with a base station through a protocol (203); or
determining the correspondence between the predetermined service characteristics and the SR resources configured on different channels in accordance with a configuration instruction about the correspondence between the predetermined service characteristics and the SR resources configured on different channels transmitted from the base station (303).

3. The scheduling method according to claim 1, wherein prior to selecting the SR resource corresponding to the first service characteristic in accordance with the first service characteristic and the correspondence and transmitting the SR through the selected SR resource, the scheduling method further comprises:
receiving a Radio Resource Control, RRC, message transmitted from the base station (201, 301); and
determining the SR resources configured by the base station for the UE on the PUCCH and the sPUCCH respectively in accordance with the RRC message (202, 302).

4. The scheduling method according to claim 3, wherein the selecting the SR resource corresponding to the first service characteristic in accordance with the first service characteristic and the correspondence and transmitting the SR through the selected SR resource comprises:
selecting the SR resource corresponding to the first service characteristic from the SR resources configured by the base station for the UE on the PUCCH and the sPUCCH respectively in accordance with the first service characteristic and the correspondence, and transmitting the SR through the selected SR resource (205, 305).

5. The scheduling method according to any one of claims 1 to 4, wherein the predetermined service characteristics comprise one or more of a Quality of Service, QoS, a priority level and a delay requirement.

6. A User Equipment, UE, comprising:
a first determination module (701) configured to determine a correspondence between predetermined service characteristics and Scheduling Request, SR, resources configured on different channels;
a second determination module (702) configured to determine a first service characteristic of a first service for triggering a SR when it is detected that the SR has been triggered; and
**characterized in that** the UE further comprises: a transmission module (703) configured to select a SR resource corresponding to the first service characteristic in accordance with the first service characteristic and the correspondence, and transmit the SR through the selected SR resource,
wherein the SR resources configured on the different channels comprise a SR resource configured on a Physical Uplink Control Channel, PUCCH, and a SR resource configured on a short Physical Uplink Control Channel, sPUCCH.

7. The UE according to claim 6, wherein the first determination module (701) comprises:
a first determination unit configured to determine the correspondence between the predetermined service characteristics and the SR resources configured on different channels in accordance with a pre-configured default rule or a rule pre-agreed with a base station through a protocol; or
a second determination unit configured to determine the correspondence between the predetermined service characteristics and the SR resources configured on different channels in accordance with a configuration instruction about the correspondence between the predetermined service characteristics and the SR resources configured on different channels transmitted from the base station.

8. The UE according to claim 6, further comprising:
a first reception module configured to receive a Radio Resource Control, RRC, message transmitted from the base station; and
a third determination module configured to determine the SR resources configured by the base station for the UE on the PUCCH and the sPUCCH respectively in accordance with the RRC message.

9. The UE according to claim 8, wherein the transmission module comprises:
a transmission unit configured to select the SR resource corresponding to the first service characteristic from the SR resources configured by the base station for the UE on the PUCCH and the sPUCCH respectively in accordance with the first service characteristic and the correspondence, and transmit the SR through the selected SR resource.

10. The UE according to any one of claims 6 to 9, wherein the predetermined service characteristics comprise one or more of a Quality of Service, QoS, a priority level and a delay requirement

## Patentansprüche

1. Planungsverfahren zur Verwendung in einem Benutzerendgerät, UE, das umfasst:
Bestimmen einer Übereinstimmung zwischen vorbestimmten Dienstcharakteristiken und Planungsanforderungs-, SR, Ressourcen, die auf unterschiedlichen Kanälen konfiguriert sind (101);
Bestimmen einer ersten Dienstcharakteristik eines ersten Dienstes zum Triggern einer SR, wenn detektiert wird, dass die SR getriggert worden ist (102, 204, 304); und
**dadurch gekennzeichnet, dass** das Planungsverfahren ferner umfasst: Auswählen einer SR-Ressource, die der ersten Dienstcharakteristik entspricht, gemäß der ersten Dienstcharakteristik und der Übereinstimmung und Übertragen der SR durch die ausgewählte SR-Ressource (103),
wobei die SR-Ressourcen, die auf den unterschiedlichen Kanälen konfiguriert sind, eine SR-Ressource, die auf einem Physical Uplink Control Channel, PUCCH, konfiguriert ist und eine SR-Ressource, die auf einem kurzen Physical Uplink Control Channel, sPUCCH, konfiguriert ist, umfassen.

2. Planungserfahren nach Anspruch 1, bei dem das Bestimmen der Übereinstimmung zwischen den vorbestimmten Dienstcharakteristiken und den SR-Ressourcen, die auf unterschiedlichen Kanälen konfiguriert sind, umfasst:
Bestimmen der Übereinstimmung zwischen den vorbestimmten Dienstcharakteristiken und den SR-Ressourcen, die auf unterschiedlichen Kanälen konfiguriert sind, gemäß einer vorkonfigurierten Default-Regel oder einer Regel, die vorab durch ein Protokoll mit einer Basisstation vereinbart worden ist (203); oder
Bestimmen der Übereinstimmung zwischen den vorbestimmten Dienstcharakteristiken und den SR-Ressourcen, die auf unterschiedlichen Kanälen konfiguriert sind, gemäß einer Konfigurationsanweisung über die Übereinstimmung zwischen den vorbestimmten Dienstcharakteristiken und den SR-Ressourcen, die auf unterschiedlichen Kanälen konfiguriert sind, die von der Basisstation übertragen wird (303).

3. Planungsverfahren nach Anspruch 1, bei dem vor dem Auswählen der SR-Ressource, die der ersten Dienstcharakteristik entspricht, gemäß der ersten Dienstcharakteristik und der Übereinstimmung und Übertragen der SR durch die ausgewählte SR-Ressource, wobei das Planungsverfahren ferner umfasst:
Empfangen einer Radio-Ressource-Control-, RRC, Mitteilung, die von der Basisstation übertragen wird (201, 301); und
Bestimmen der SR-Ressourcen, die von der Basisstation für das UE auf dem PUCCH bzw. dem sPUCCH gemäß der RRC-Mitteilung konfiguriert werden (202, 302).

4. Planungsverfahren nach Anspruch 3, bei dem das Auswählen der SR-Ressource, die der ersten Dienstcharakteristik entspricht, gemäß der ersten Dienstcharakteristik und der Übereinstimmung und das Übertragen der SR durch die ausgewählte SR-Ressource umfassen:
Auswählen der SR-Ressource, die der ersten Dienstcharakteristik entspricht, aus den SR-Ressourcen, die von der Basisstation für das UE auf dem PUCCH bzw. dem sPUCCH konfiguriert werden, gemäß der ersten Dienstcharakteristik und der Übereinstimmung und Übertragen der SR durch die ausgewählte SR-Ressource (205, 305).

5. Planungsverfahren nach einem der Ansprüche 1 bis 4, bei dem die vorbestimmten Dienstcharakteristiken eines oder mehrere von Quality of Service, QoS, einer Prioritätsstufe und einem Verzögerungserfordernis umfassen.

6. Benutzerendgerät, UE, das aufweist:
ein erstes Bestimmungsmodul (701), das ausgebildet ist zum Bestimmen einer Übereinstimmung zwischen vorbestimmten Dienstcharakteristiken und Planungsanforderungs-, SR, Ressourcen, die auf unterschiedlichen Kanälen konfiguriert sind;
ein zweites Bestimmungsmodul (702), das ausgebildet ist zum Bestimmen einer ersten Dienstcharakteristik eines ersten Dienstes zum Triggern einer SR, wenn detektiert wird, dass die SR getriggert worden ist; und
**dadurch gekennzeichnet, dass** das UE ferner aufweist: ein Übertragungsmodul (703), das ausgebildet ist zum Auswählen einer SR-Ressource, die der ersten Dienstcharakteristik entspricht, gemäß der ersten Dienstcharakteristik und der Übereinstimmung und Übertragen der SR durch die ausgewählte SR-Ressource,
wobei die SR-Ressourcen, die auf den unterschiedlichen Kanälen konfiguriert sind, eine SR-Ressource, die auf einem Physical Uplink Control Channel, PUCCH, konfiguriert ist und eine SR-Ressource, die auf einem kurzen Physical Uplink Control Channel, sPUCCH, konfiguriert ist, umfassen.

7. UE nach Anspruch 6, bei dem das erste Bestimmungsmodul (701) aufweist:
eine erste Bestimmungseinheit, die ausgebildet ist zum Bestimmen der Übereinstimmung zwischen den vorbestimmten Dienstcharakteristiken und den SR-Ressourcen, die auf unterschiedlichen Kanälen konfiguriert sind, gemäß einer vorkonfigurierten Default-Regel oder einer Regel, die vorab durch ein Protokoll mit einer Basisstation vereinbart worden ist; oder
eine zweite Bestimmungseinheit, die ausgebildet ist zum Bestimmen der Übereinstimmung zwischen den vorbestimmten Dienstcharakteristiken und den SR-Ressourcen, die auf unterschiedlichen Kanälen konfiguriert sind, gemäß einer Konfigurationsanweisung über die Übereinstimmung zwischen den vorbestimmten Dienstcharakteristiken und den SR-Ressourcen, die auf unterschiedlichen Kanälen konfiguriert sind, die von der Basisstation übertragen wird.

8. UE nach Anspruch 6, das ferner aufweist:
ein erstes Empfangsmodul, das ausgebildet ist zum Empfangen einer Radio-Ressource-Control-, RRC, Mitteilung, die von der Basisstation übertragen wird; und
ein drittes Bestimmungsmodul, das ausgebildet ist zum Bestimmen der SR-Ressourcen, die von der Basisstation für das UE auf dem PUCCH bzw. dem sPUCCH gemäß der RRC-Mitteilung konfiguriert werden.

9. UE nach Anspruch 8, bei dem das Übertragungsmodul aufweist:
eine Übertragungseinheit, die ausgebildet ist zum Auswählen der SR-Ressource, die der ersten Dienstcharakteristik entspricht, aus den SR-Ressourcen, die von der Basisstation für das UE auf dem PUCCH bzw. dem sPUCCH konfiguriert werden, gemäß der ersten Dienstcharakteristik und der Übereinstimmung und Übertragen der SR durch die ausgewählte SR-Ressource.

10. UE nach einem der Ansprüche 6 bis 9, bei dem die vorbestimmten Dienstcharakteristiken eines oder mehrere von Quality of Service, QoS, einer Prioritätsstufe und einem Verzögerungserfordernis umfassen.

## Revendications

1. Procédé de planification destiné à être utilisé dans un Equipement d'Utilisateur, UE, comprenant le fait de:
déterminer une correspondance entre les caractéristiques de service prédéterminées et les ressources de Demande de Planification, SR, configurées sur différents canaux (101);
déterminer une première caractéristique de service d'un premier service pour déclencher une SR lorsqu'il est détecté que la SR a été déclenchée (102, 204, 304); et
**caractérisé en ce que** le procédé de planification comprend par ailleurs le fait de: sélectionner une ressource SR correspondant à la première caractéristique de service selon la première caractéristique de service et la correspondance, et transmettre la SR par l'intermédiaire de la ressource SR sélectionnée (103),
dans lequel les ressources SR configurées sur les différents canaux comprennent une ressource SR configurée sur un Canal de Commande de Liaison Montante Physique, PUCCH, et une ressource SR configurée sur un Canal de Commande de Liaison Montante Physique court, sPUCCH.

2. Procédé de planification selon la revendication 1, dans lequel la détermination de la correspondance entre les caractéristiques de service prédéterminées et les ressources SR configurées sur différents canaux comprend le fait de:
déterminer la correspondance entre les caractéristiques de service prédéterminées et les ressources SR configurées sur différents canaux selon une règle par défaut préconfigurée ou selon une règle préalablement convenue avec une station de base au moyen d'un protocole (203); ou
déterminer la correspondance entre les caractéristiques de service prédéterminées et les ressources SR configurées sur différents canaux selon une instruction de configuration relative à la correspondance entre les caractéristiques de service prédéterminées et les ressources SR configurées sur différents canaux transmise à partir de la station de base (303).

3. Procédé de planification selon la revendication 1, dans lequel, avant de sélectionner la ressource SR correspondant à la première caractéristique de service selon la première caractéristique de service et la correspondance et de transmettre la SR par l'intermédiaire de la ressource SR sélectionnée, le procédé de planification comprend par ailleurs le fait de:
recevoir un message de Contrôle de Ressource radio, RRC, transmis à partir de la station de base (201, 301); et
déterminer les ressources SR configurées par la station de base pour l'UE respectivement sur le PUCCH et sur le sPUCCH selon le message de RRC (202, 302).

4. Procédé de planification selon la revendication 3, dans lequel la sélection de la ressource SR correspondant à la première caractéristique de service selon la première caractéristique de service et la correspondance et la transmission du SR par l'intermédiaire de la ressource SR sélectionnée comprend le fait de:
sélectionner la ressource SR correspondant à la première caractéristique de service parmi les ressources SR configurées par la station de base pour l'UE respectivement sur le PUCCH et sur le sPUCCH selon la première caractéristique de service et la correspondance, et transmettre la SR par l'intermédiaire de la ressource SR sélectionnée (205, 305).

5. Procédé de planification selon l'une quelconque des revendications 1 à 4, dans lequel les caractéristiques de service prédéterminées comprennent un ou plusieurs parmi une Qualité de Service, QoS, un niveau de priorité et une condition requise de retard.

6. Equipement d'Utilisateur, UE, comprenant:
un premier module de détermination (701) configuré pour déterminer une correspondance entre les caractéristiques de service prédéterminées et les ressources de Demande de Planification, SR, configurées sur différents canaux;
un deuxième module de détermination (702) configuré pour déterminer une première caractéristique de service d'un premier service pour déclencher une SR lorsqu'il est détecté que la SR a été déclenchée; et
**caractérisé par le fait que** l'UE comprend par ailleurs: un module de transmission (703) configuré pour sélectionner une ressource SR correspondant à la première caractéristique de service selon la première caractéristique de service et la correspondance, et transmettre la SR par l'intermédiaire de la ressource SR sélectionnée,
dans lequel les ressources SR configurées sur les différents canaux comprennent une ressource SR configurée sur un Canal de Commande de Liaison Montante Physique, PUCCH, et une ressource SR configurée sur un Canal de Commande de Liaison Montante Physique court, sPUCCH.

7. UE selon la revendication 6, dans lequel le premier module de détermination (701) comprend:
une première unité de détermination configurée pour déterminer la correspondance entre les caractéristiques de service prédéterminées et les ressources SR configurées sur différents canaux selon une règle par défaut préconfigurée ou selon une règle préalablement convenue avec une station de base au moyen d'un protocole; ou
une deuxième unité de détermination configurée pour déterminer la correspondance entre les caractéristiques de service prédéterminées et les ressources SR configurées sur différents canaux selon une instruction de configuration relative à la correspondance entre les caractéristiques de service prédéterminées et les ressources SR configurées sur différents canaux transmis à partir de la station de base.

8. UE selon la revendication 6, comprenant par ailleurs:
un premier module de réception configuré pour recevoir un message de Contrôle de Ressources Radio, RRC, transmis à partir de la station de base; et
un troisième module de détermination configuré pour déterminer les ressources SR configurées par la station de base pour l'UE respectivement sur le PUCCH et sur le sPUCCH selon le message de RRC.

9. UE selon la revendication 8, dans lequel le module de transmission comprend:
une unité de transmission configurée pour sélectionner la ressource SR correspondant à la première caractéristique de service parmi les ressources SR configurées par la station de base pour l'UE respectivement sur le PUCCH et sur le sPUCCH selon la première caractéristique de service et la correspondance, et pour transmettre la SR par l'intermédiaire de la ressource SR sélectionnée.

10. UE selon l'une quelconque des revendications 6 à 9, dans lequel les caractéristiques de service prédéterminées comprennent un ou plusieurs parmi une Qualité de Service, QoS, un niveau de priorité et une condition requise de retard.
